# FASCICULE DE BREVET EUROPEEN

(11) **EP 3 121 070 B1**
(45) Date de publication et mention de la délivrance du brevet: **06.06.2018**
(21) Numéro de dépôt: 16180474.5
(22) Date de dépôt: 21.07.2016
(51) Int. Cl.: B60S 1/08, B60S 1/52, B60S 1/56, G02B 27/00

(54) **DISPOSITIF DE NETTOYAGE D'UN CAPTEUR POUR VEHICULE AUTOMOBILE**
REINIGUNGSVORRICHTUNG EINES SENSORS FÜR KRAFTFAHRZEUG
SENSOR CLEANING DEVICE FOR A MOTOR VEHICLE

(30) Priorité: 22.07.2015 FR 1556959
(43) Date de publication de la demande: 25.01.2017
(73) Titulaire: Valeo Systèmes d'Essuyage, 78322 Le Mesnil Saint Denis (FR)
(72) Inventeur: GRASSO, Giuseppe, 63340 Le Breuil sur Couze (FR); TREBOUET, Marcel, 78450 CHAVENAY (FR)
(74) Mandataire: Callu Danseux, Violaine

(56) Documents cités:
- EP-A2- 1 970 269
- US-A1- 2015 138 357

## Description

La présente invention se rapporte au domaine des dispositifs d'aide à la conduite et, plus particulièrement, au domaine des capteurs utilisés à cette fin, tels que des moyens de prise de vue, en particulier des caméras, ou des moyens de détection par ondes électromagnétiques, en particulier des radars ou des lidars. Dans ce domaine, l'invention vise plus particulièrement les dispositifs de nettoyage de tels moyens de prise de vue. Le document US 2015/0138357 A1 divulgue un dispositif de nettoyage selon le préambule de la revendication 1. Des capteurs équipent un nombre de plus en plus grand de véhicules automobiles afin d'aider le conducteur du véhicule dans certaines situations de conduite, dont une, bien connue, est l'aide au stationnement. Pour que cette aide soit la plus efficace possible, les images fournies par les moyens prises de vue, ou les données transmises par les radars par exemple, doivent être de la meilleure qualité possible, et il est donc indispensable de disposer de faces de ces capteurs, tournées vers l'extérieur du véhicule, qui soient propres. Pour ce faire, un dispositif de nettoyage du capteur peut être associé à ce capteur, et commandé pour injecter, sur ledit capteur, un flux de fluide nettoyant juste avant que soit réalisée la détection. Il est intéressant de commander le dispositif pour déterminer la durée et le commencement de la séquence de nettoyage, et pour pouvoir escamoter le dispositif de nettoyage après usage, afin qu'ils ne gênent pas la détection lorsque les capteurs sont en fonctionnement, et afin qu'ils soient protégés des chocs par exemple. En outre, ils doivent être le plus compacts possibles pour répondre aux contraintes d'encombrement du véhicule. Par ailleurs, il est recherché que de tels dispositifs permettent l'injection de différents fluides, gazeux ou liquides. En effet, dans le cas où un liquide de nettoyage est projeté sur le capteur, et par exemple la lentille d'une caméra de prise de vue, pour en chasser les salissures, il est intéressant de sécher rapidement cette lentille afin d'éviter tout risque de pollution de l'image par d'éventuelles traces qu'un tel liquide pourrait laisser (gouttes, coulures, etc ...).

La présente invention a pour but d'optimiser un tel dispositif de nettoyage, tant dans ses performances de nettoyage que dans son encombrement.

Dans ce but, la présente invention a pour objet un dispositif de nettoyage d'un capteur d'un véhicule automobile, qui comporte un piston mobile en coulissement dans un corps creux de révolution autour d'un axe longitudinal et porteur à une première extrémité d'une buse unique de distribution d'un ou plusieurs fluides. Le piston est creusé pour permettre l'acheminement vers la buse d'au moins un premier fluide et il est rendu mobile, entre une position de repos et une position de travail, sous l'effet d'un deuxième fluide pour prendre une position de travail dans laquelle la buse est déployée.

Le dispositif selon l'invention comporte, en particulier, des moyens d'admission et d'acheminement sélectifs d'un ou plusieurs fluides distincts vers cette buse unique de distribution.

Les moyens d'admission et d'acheminement sélectifs d'un ou plusieurs fluides peuvent notamment comporter un premier embout d'admission de fluide, centré sur l'axe longitudinal du corps creux, et un deuxième embout d'admission de fluide excentré par rapport audit premier embout d'admission de fluide. Ces embouts d'admission de fluide peuvent être formés en saillie d'une bride d'entrée venant en recouvrement du corps creux et du piston à l'extrémité opposée à la buse.

Selon une caractéristique de l'invention, le deuxième fluide est acheminé vers un volume intérieur, délimité par au moins une paroi du piston creux. Et l'on peut prévoir que le piston creux et les moyens d'admission et d'acheminement sélectifs d'un ou plusieurs fluides sont agencés, lorsque le piston creux est dans ladite position de travail, soit pour que le deuxième fluide soit acheminé via le piston creux vers la buse de nettoyage, soit pour que le deuxième fluide soit bloqué dans ledit volume intérieur.

Selon différentes caractéristiques de l'invention :
- le piston creux comporte une partie centrale sensiblement cylindrique, apte à coulisser au sein d'un tube creux coaxial d'un corps creux du dispositif selon l'invention. Avantageusement, le piston creux comporte également une partie terminale de distribution dans laquelle la buse unique de distribution est apte à être insérée et bloquée, ainsi qu'une partie d'admission apte à coulisser au sein d'une première cavité du corps creux, de plus grands diamètres que le tube creux de ce même corps creux.
- un conduit de distribution, une chambre d'acheminement, et une chambre d'admission traversants, coaxiaux entre eux et avec le piston et le corps creux, et communicant entre eux, sont respectivement agencés dans la partie terminale de distribution, la partie centrale, et la partie d'admission du piston creux. Avantageusement, le conduit de distribution communique avec un canal de distribution de la buse de distribution, lui-même relié à un canal d'injection qui débouche en un orifice d'injection de cette buse unique de distribution.
- le diamètre intérieur de la chambre d'acheminement est, au voisinage de la zone par laquelle la chambre d'acheminement communique avec la chambre d'admission, élargi, et le diamètre intérieur de la chambre d'admission est, sur toute la longueur de cette dernière, au moins égal au diamètre élargi de la chambre d'acheminement.
- le diamètre intérieur du conduit de distribution présente, au voisinage de la zone par laquelle le conduit de distribution communique avec la chambre d'acheminement, un rétrécissement, et l'épaulement formé, au sein du conduit de distribution, par ce rétrécissement, accueille une valve anti-retour.

Selon une caractéristique importante de l'invention, les moyens d'admission et d'acheminement sélectifs d'un ou plusieurs fluides comprennent une bride d'entrée apte à coopérer simultanément avec un embout de la partie d'admission et avec un embout terminal du corps creux pour réaliser, à l'opposé de la buse unique de distribution, une obturation de l'ensemble formé par le corps creux et par le piston creux.

Avantageusement, un tube d'acheminement s'étend, à partir de la bride d'entrée, au sein de la chambre d'admission et de la chambre d'acheminement. Selon l'invention, ce tube d'acheminement est apte à coulisser dans ces chambres, coaxialement avec celles-ci, et se prolonge, à l'opposé de ces dernières, à partir de la bride d'entrée, par un premier embout d'admission. Par ailleurs, selon l'invention, un deuxième embout d'admission s'étend, à partir de la bride d'entrée, dans la même direction que le premier embout d'admission. Avantageusement, un premier canal d'admission, traversant, coaxial avec la chambre d'acheminement et avec la chambre d'admission, est agencé au sein du tube d'acheminement et du premier embout d'admission, et un deuxième canal d'admission, traversant, est agencé au sein du deuxième embout d'admission et de la bride d'entrée. Avantageusement, le deuxième canal d'admission débouche au sein d'un volume intérieur délimité, au sein du dispositif selon l'invention, par la bride d'entrée, la partie d'admission, et le corps creux.

Selon une autre caractéristique importante de l'invention, une gorge annulaire est agencée à la périphérie du tube d'acheminement, au voisinage de son extrémité opposée à celle par laquelle il s'étend à partir de la bride d'entrée. Cette gorge annulaire est avantageusement apte à accueillir un joint torique qui assure l'étanchéité du coulissement du tube d'acheminement au sein de la partie de plus petit diamètre intérieur de la chambre d'acheminement. Plus précisément, les dimensions du joint torique sont définies de telle manière que, lorsqu'il se trouve dans la partie de diamètre élargi de la chambre d'acheminement et dans la chambre d'admission, il permet la mise en communication du volume intérieur défini plus haut avec la chambre d'acheminement. En d'autres termes, ce joint torique assure ou non un coulissement étanche du tube d'acheminement au sein de la chambre d'acheminement selon les positions relatives de ces deux éléments entre eux.

Le fonctionnement du dispositif selon l'invention est le suivant. Sous l'effet de l'admission d'un fluide au sein du volume intérieur défini plus haut, par l'intermédiaire du deuxième canal d'admission, ce volume intérieur augmente, conduisant à un coulissement du piston creux autour du tube d'acheminement. Il s'ensuit un déplacement longitudinal de la buse unique de distribution jusqu'à une position déployée de celle-ci dans laquelle elle est éloignée du corps creux du dispositif selon l'invention. Tant que les positions relatives du tube d'acheminement et de la chambre d'acheminement sont telles que le joint torique assure l'étanchéité du coulissement de la chambre d'acheminement autour du tube d'acheminement, le fluide admis dans le volume intérieur précité y est confiné et ne peut pas accéder à la chambre d'acheminement. Avantageusement, un joint, par exemple du type joint à lèvre, peut être placé au sein de ce volume intérieur pour garantir cette étanchéité. Lorsque les positions relatives du tube d'acheminement et de la chambre d'acheminement sont telles que le joint torique se trouve dans la partie de diamètre élargi de la chambre d'acheminement et/ou dans la chambre d'admission, ce dernier permet, comme cela a été indiqué plus haut, la mise en communication du volume intérieur défini plus haut avec la chambre d'acheminement. Le fluide admis dans le volume intérieur précité peut alors se répandre dans la chambre d'acheminement, où il peut, par exemple, selon l'application souhaitée, y être mélangé avec un autre fluide admis, lui, par le premier canal d'admission et par le conduit d'acheminement définis plus haut. Le ou les fluides ainsi présents dans la chambre d'acheminement peuvent ensuite, par le biais du conduit de distribution, être acheminés jusqu'à la buse unique de distribution d'où ils seront délivrés par le dispositif selon l'invention.

L'invention permet ainsi, par un dispositif simple et compact, de choisir de distribuer sélectivement :
- soit un seul fluide ou mélange de fluides, admis par le seul premier canal d'admission. Dans ce cas, la distribution sera continue.
- soit un seul fluide ou mélange de fluides, admis par le seul deuxième canal d'admission. Dans ce cas, la distribution sera discontinue.
- soit un mélange de fluides ou de mélanges de fluides, admis respectivement par le premier et par le deuxième canal d'admission. Dans ce cas, une grande variété de profils de distribution pourra être obtenue, selon les profils d'alimentation choisis pour les différents canaux d'admission : admission simultanée des deux fluides ou mélanges de fluides, admission d'un fluide ou d'un mélange de fluides décalée dans le temps par rapport à l'admission de l'autre fluide ou mélange de fluides, etc ...

Avantageusement, le dispositif selon l'invention comporte également un ressort apte à être comprimé lorsque, sous l'effet de l'admission d'un fluide au sein du volume intérieur défini plus haut par l'intermédiaire du deuxième canal d'admission, le piston creux est entraîné à coulisser autour du tube d'acheminement sous l'effet de l'augmentation dudit volume intérieur. Inversement, ce ressort est apte à ramener ledit piston creux dans une position initiale lorsque l'admission de fluide par l'intermédiaire du deuxième canal d'admission cesse et que, sous l'effet de la diminution du volume intérieur précité qui en résulte, les positions relatives de la chambre d'acheminement et du tube d'acheminement redeviennent telles que le joint torique assure le coulissement étanche de ces deux éléments l'un par rapport à l'autre.

D'autres caractéristiques, détails et avantages de l'invention ressortiront plus clairement à la lecture de la description donnée ci-après à titre indicatif en relation avec des dessins dans lesquels :
- la figure 1 est une vue générale, en coupe, d'un dispositif selon l'invention, dans une première position de fonctionnement,
- la figure 2 est une vue générale en coupe d'un dispositif selon l'invention, dans une deuxième position de fonctionnement,
- la figure 3 est une vue générale en coupe d'un dispositif selon l'invention, dans une troisième position de fonctionnement,
- et les figures 4 et 5 sont des vues en perspective d'un dispositif selon l'invention et du capteur à nettoyer, selon une position de repos (figure 4) et une position de travail (figure 5).

Il faut tout d'abord noter que les figures exposent l'invention de manière détaillée pour sa mise en oeuvre, mais que lesdites figures peuvent bien entendu servir à mieux définir l'invention le cas échéant.

Dans la description qui suit, les dénominations "amont" et "aval" se réfèrent à la direction d'écoulement des fluides de nettoyage dans le dispositif de nettoyage selon l'invention. Ainsi, la dénomination "amont" se réfère au côté du dispositif par lequel le ou les fluides sont admis dans le dispositif selon l'invention, et la dénomination "aval" se réfère au côté du dispositif selon l'invention par lequel le ou les fluides sont distribués à l'extérieur du dispositif selon l'invention.

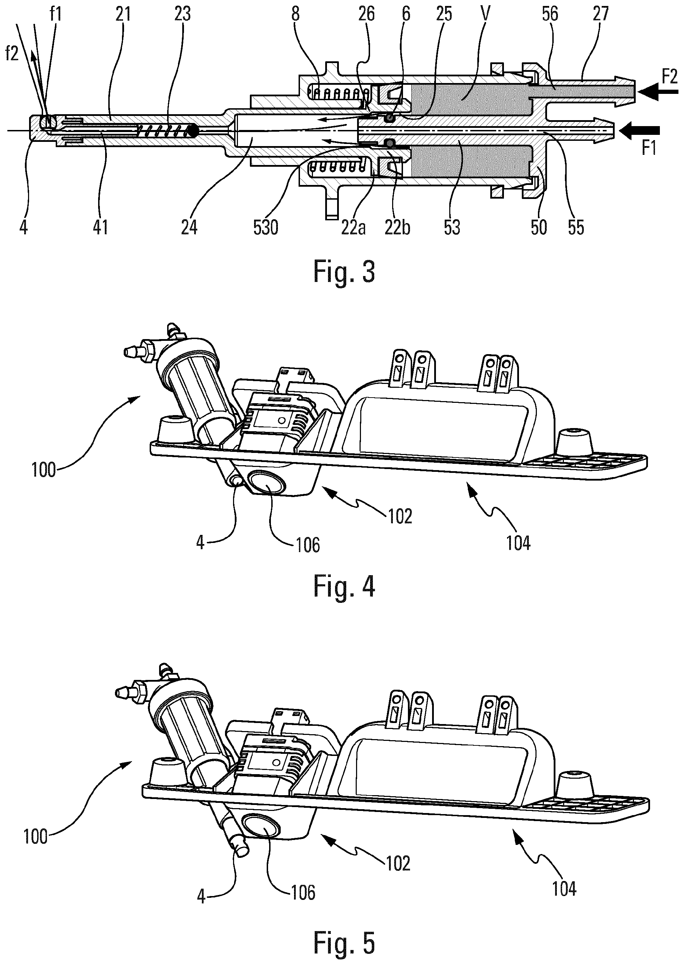

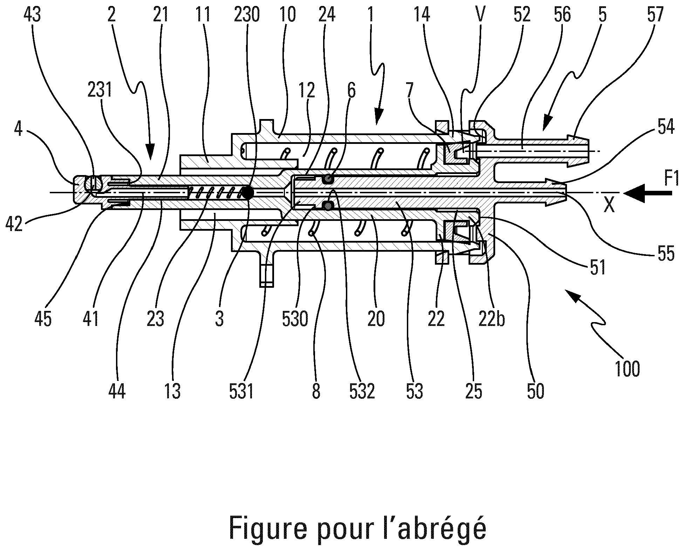

En référence aux figures 4 et 5, un dispositif de nettoyage 100 est disposé au voisinage d'un capteur 102, fixé sur un support 104 formant partie ou rapporté sur un élément de carrosserie d'un véhicule automobile. Le dispositif de nettoyage est ici agencé dans une disposition inclinée par rapport au plan du support, de manière à ce que son extrémité libre, porteuse d'une buse d'injection 4, lorsqu'elle est déployée (figure 5), est en regard de la face 106 à nettoyer du capteur, c'est-à-dire la face tournée vers l'extérieur du véhicule, et qu'elle est en retrait de cette face à nettoyer 106 lorsqu'elle est escamotée (figure 4).

Le dispositif de nettoyage 100 selon l'invention comporte, en particulier, un corps creux 1 présentant une symétrie de révolution selon son axe longitudinal X, et dont le volume intérieur est apte à accueillir, coulissant selon cet axe longitudinal X, un piston creux 2 qui présente également une symétrie de révolution selon l'axe longitudinal X.

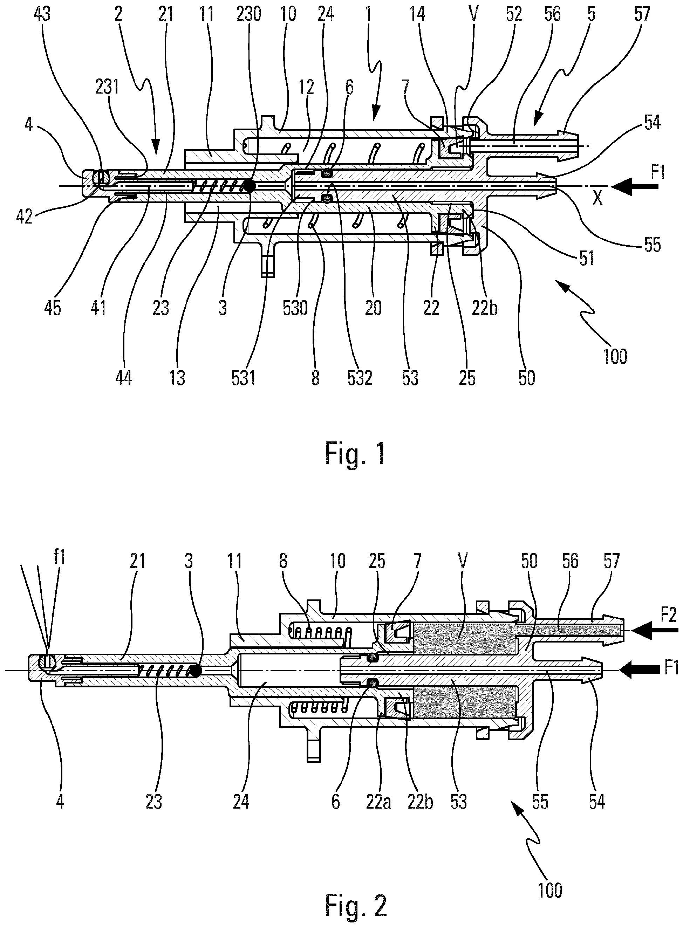

Plus précisément, le corps creux 1 est composé d'un premier cylindre creux 10 dont l'axe de révolution est confondu avec l'axe longitudinal X, et d'un tube creux 11 sensiblement cylindrique, dont l'axe de révolution est également confondu avec l'axe longitudinal X. Le diamètre extérieur du tube creux 11 est inférieur au diamètre extérieur du premier cylindre 10. Comme le montrent les figures 1 à 3, le tube creux 11 s'étend, à partir de l'extrémité aval du premier cylindre creux 10, à la fois vers l'extérieur et vers l'intérieur de ce premier cylindre creux 10. Le premier cylindre creux 10 et le tube creux 11 définissent ainsi, dans le corps creux 1, respectivement une première cavité 12 et une deuxième cavité 13. Ces deux cavités 12, 13 sont communicantes, coaxiales autour de l'axe longitudinal X du corps creux 1, et le diamètre intérieur de la première cavité 12 est supérieur au diamètre intérieur de la deuxième cavité 13. La deuxième cavité 13 est traversante d'une extrémité à l'autre du tube creux 11, et la première cavité 12 est débouchante à l'extrémité amont du premier cylindre creux 10, opposée à l'extrémité à partir de laquelle s'étend le tube creux 11. En d'autres termes, le corps creux 1 se présente sensiblement sous la forme d'un premier cylindre creux 10, d'axe longitudinal X, dont le volume intérieur forme, selon l'axe longitudinal X, une première cavité cylindrique 12, débouchante à l'extrémité amont d'admission du corps creux, et dont le fond, situé à l'extrémité aval, opposé à l'extrémité d'admission, est percé coaxialement d'un tube creux 11 de plus petit diamètre, dont une partie s'étend à la fois vers l'amont, à l'intérieur de la première cavité 12, et dont une autre partie s'étend vers l'aval, à l'extérieur du corps creux 1, à partir du fond du premier cylindre creux 10.

Le piston creux 2, coaxial du corps 1, est schématiquement formé d'une partie centrale 20 sensiblement cylindrique, à partir de laquelle s'étendent, respectivement vers l'aval et vers l'amont, une partie terminale de distribution 21 également sensiblement cylindrique et une partie d'admission 22. La partie centrale 20, la partie terminale de distribution 21, et la partie d'admission 22 présentent toutes une symétrie de révolution selon l'axe longitudinal X du corps creux 1. Le diamètre extérieur de la partie terminale de distribution 21 est inférieur au diamètre intérieur de la deuxième cavité 13 du corps creux 1, et le diamètre extérieur de la partie centrale 20 est très légèrement inférieur au diamètre intérieur de cette deuxième chambre 13, de telle manière que cette partie centrale 20 puisse coulisser de manière ajustée au sein de cette deuxième cavité 13 sans frottement et sans jeu excessifs. Par ailleurs, la partie d'admission 22 présente une collerette 22a, s'étendant en saillie, sensiblement perpendiculairement, de la paroi longitudinale délimitant le piston creux le long de l'axe et un embout prolongeant longitudinalement ladite paroi vers l'extrémité amont du piston creux 2 en présentant un décalage radial, le diamètre intérieur de cet embout 22b étant plus grand que le diamètre intérieur de la partie centrale 20. La collerette 22a présente un diamètre extérieur maximal très légèrement inférieur au diamètre intérieur de la première cavité 12 ménagée dans le corps creux 1, de telle manière que cette partie d'admission 22 puisse coulisser de manière ajustée au sein de cette première cavité, sans frottement et sans jeu excessifs.

Selon l'invention, les trois parties du piston creux 2 sont percées coaxialement d'un ensemble de chambres et conduits traversants communicant entre eux.

Plus précisément, la partie terminale de distribution 21 est percée d'un conduit de distribution 23, traversant, dont le diamètre intérieur, ainsi que le montrent les figures, présente un rétrécissement au voisinage de l'extrémité par laquelle la partie terminale de distribution 21 est rattachée à la partie centrale 20 du piston creux 2, c'est-à-dire au voisinage de l'extrémité amont de la partie terminale de distribution 21. Au niveau de ce rétrécissement, le conduit de distribution 23 forme ainsi un épaulement 230. Selon l'invention, une valve anti-retour 3, qui peut être par exemple une bille, un clapet, une valve à battant ou double battants, est accueillie dans l'épaulement 230 formé dans le conduit de distribution 23. A son extrémité aval, opposée à celle par laquelle elle se rattache à la partie centrale 20, la partie terminale de distribution 21 est agencée pour accueillir une buse de distribution 4. Cette buse, de forme générale sensiblement cylindrique, coaxiale de l'axe longitudinal X du corps creux 1 et du piston creux 2, est percée d'un canal de distribution 41 et d'un canal de délivrance 42, communicant avec le canal de distribution 41 et sensiblement perpendiculaire à ce dernier. Le canal de distribution 41 s'étend sensiblement dans le prolongement du conduit de distribution 23 agencé dans la partie terminale 21 du piston creux 2, et le canal de délivrance 42 débouche, à la surface de la buse de distribution 4, en un orifice de distribution 43.

La buse de distribution 4, dont le diamètre extérieur est sensiblement égal à celui de la partie terminale de distribution 21 du piston creux 2, forme sensiblement un bouchon à l'extrémité de ce dernier, et elle est fixée au sein du conduit de distribution 23 sur la partie terminale de distribution par insertion à force d'un appendice 44 délimitant le canal de distribution 41. Avantageusement, d'autres formes appropriées, non détaillées ici, peuvent être ménagées conjointement dans l'extrémité aval du conduit de distribution 23 et sur la buse de distribution 4 afin de permettre le blocage de cette dernière au sein de ce conduit.

Selon l'invention, la partie centrale 20 du piston creux 2 est percée longitudinalement d'une chambre d'acheminement 24 traversante et débouchant sur le conduit de distribution 23. Au voisinage de la partie d'admission 22, le diamètre intérieur de la chambre d'acheminement 24 est, selon l'invention, élargi, et la chambre d'acheminement 24 ainsi élargie se prolonge, au sein de la partie d'admission, par une chambre d'admission 25 dont le diamètre intérieur est au moins égal au diamètre élargi de la chambre d'acheminement 24. La chambre d'admission 25 s'étend, selon l'axe longitudinal X, de l'extrémité amont à l'extrémité aval de la partie d'admission 22. En d'autres termes, le diamètre intérieur de la partie d'admission est plus grand que le diamètre intérieur de la partie centrale 20, formant à la jonction de ces deux zones un épaulement 26.

Tels qu'ils viennent d'être décrits, le corps creux 1 et le piston creux 2 forment ainsi un ensemble d'axe de révolution longitudinal X, dans lequel sont successivement ménagés, à partir d'une buse de distribution 4 placée à l'extrémité aval d'une partie terminale de distribution 21 du piston creux 2, un conduit de distribution 23, une chambre d'acheminement 24 et une chambre d'admission 25, tous coaxiaux d'axe longitudinal X, tous traversants, et tous communicant entre eux ainsi qu'avec un canal de distribution 41 et un canal de délivrance 42 agencés dans la buse de distribution 4.

Selon l'invention, le dispositif de nettoyage comporte également un ensemble d'admission et d'acheminement de fluides 5 qui va maintenant être décrit plus précisément.

Comme le montrent les figures 1 à 3, l'ensemble d'admission et d'acheminement de fluides 5 comprend une bride d'entrée 50, agencée de telle manière qu'elle peut venir se placer respectivement sur l'extrémité amont d'admission du corps creux 1, en recouvrement de la partie d'admission 22, afin de former une obturation de ces extrémités. Plus précisément, la bride d'entrée 50 comporte, en sa face aval destinée à venir obturer lesdites extrémités, une première et une deuxième gorges annulaires, respectivement 51, 52, agencées coaxialement autour de l'axe longitudinal X du corps creux 1 et du piston creux 2. La première gorge 51 est définie de telle manière qu'elle peut accueillir, en appui, l'embout 22b agencée à l'extrémité amont de la partie d'admission 22 du piston creux 2, et la deuxième gorge 52 est agencée pour accueillir un embout 14 agencé à l'extrémité amont du corps creux 1. Ainsi, la bride d'entrée 50 est apte à coopérer à la fois avec le piston creux 2 et avec le corps creux 1 pour venir obturer simultanément les extrémités amont d'admission de ces deux pièces. La bride vient en recouvrement de l'extrémité amont d'admission du corps creux, et elle forme un moyen de fermeture étanche de ce corps creux par des moyens de fixation prévus à cet effet, et par exemple des moyens de vissage ou encliquetage, sur le corps.

Selon l'invention, la partie d'admission 22 et la bride d'entrée 50 sont agencées de telle manière que, lorsque la bride d'entrée 50 est mise en place à l'extrémité amont du corps creux 1 et de la partie d'admission 22, elle délimite, avec ces éléments, un volume annulaire intérieur V, comme le montrent les figures 1 à 3. Plus précisément, le volume V est délimité, vers l'amont, par une face aval de la bride d'entrée 50 et vers l'aval, par une face amont de la collerette 22a de la partie d'admission 22 et, radialement, le volume V est respectivement délimité, d'une part, par la paroi intérieure du premier cylindre 10 du corps creux 1 et, d'autre part, par les parois extérieures de l'embout 22b de la partie d'admission 22.

Selon l'invention, un tube d'acheminement 53, centré sur l'axe longitudinal X, s'étend vers l'aval du dispositif de nettoyage, à partir de la face aval de la bride d'entrée 50. Ce tube d'acheminement se prolonge vers l'extérieur du dispositif, du côté amont de la bride d'entrée 50, par un premier embout d'admission 54. Le diamètre extérieur du tube d'acheminement 53 est avantageusement choisi très légèrement inférieur au diamètre intérieur de la chambre d'acheminement 24, de telle manière que le tube d'acheminement 53 puisse coulisser librement dans ladite chambre d'acheminement. Le tube d'acheminement 53 et le premier embout d'admission 54 sont percés d'un premier canal d'admission 55, traversant, qui s'étend d'une extrémité à l'autre du tube d'acheminement 53 et du premier embout d'admission 54. Selon le mode de réalisation préféré illustré par les figures 1 à 3, le diamètre intérieur du premier canal d'admission 55 est sensiblement égal au diamètre intérieur du conduit de distribution 23 en sa partie réduite, en amont d'une valve anti-retour 3. Avantageusement également, un dégagement est agencé à la périphérie de l'extrémité aval du tube d'acheminement 53. Ce dégagement définit ainsi un épaulement annulaire 530 de faible largeur à la périphérie aval du tube d'acheminement 53, et un embout terminal aval 531 de ce tube d'acheminement.

Selon une caractéristique de l'invention, une gorge annulaire 532 est agencée radialement à la périphérie du tube d'acheminement 53. La gorge annulaire 532 est avantageusement placée à proximité de l'extrémité aval du tube d'acheminement 53. Selon l'invention, la gorge annulaire 532 accueille avantageusement un joint 6, préférentiellement torique, dont le rôle sera précisé plus loin et dont les dimensions sont avantageusement choisies, selon l'invention, de telle manière qu'il assure le coulissement étanche du tube d'acheminement 53 dans la partie de plus petit diamètre de la chambre d'acheminement 24.

Selon l'invention également, un deuxième canal d'admission 56 est agencé dans un deuxième embout d'admission 57 qui s'étend à partir de la bride d'entrée 50, en amont de celle-ci, et parallèlement au premier embout d'admission 54. Le deuxième canal d'admission traverse la bride d'entrée 50, et est placé sur cette dernière de telle manière qu'il débouche avantageusement dans le volume V défini plus haut.

On va maintenant décrire le fonctionnement du dispositif de nettoyage selon l'invention, dans lequel le piston creux est rendu mobile à l'intérieur du corps creux sous l'effet d'un fluide, entre une première position illustrée sur les figures 1 et 4 et une position de travail, illustrée sur les figures 2, 3 et 5.

Dans la première position, ou position de repos, du dispositif, si l'on imagine injecter un premier fluide par le premier embout d'injection 54 selon la direction illustrée par la flèche F1, ce premier fluide est tout d'abord acheminé par le premier canal d'admission 55, jusqu'à l'extrémité aval du tube d'acheminement 53. Là, le premier fluide débouche dans la chambre d'acheminement 24, à l'extrémité aval de l'embout terminal 531 du tube d'acheminement 53. Dans la position illustrée par la figure 1, la présence du joint 6, qui assure l'étanchéité du coulissement du tube d'acheminement 53 dans la partie de plus petit diamètre de la chambre d'acheminement 24, empêche toute remontée du premier fluide vers l'amont de la chambre d'acheminement 24 du dispositif. Le premier fluide est donc alors acheminé dans le conduit de distribution 23, dans lequel la valve anti-retour 3 empêche également toute remontée vers l'amont, puis, enfin, vers le canal de distribution 41 et, pour finir, dans le canal de délivrance 42 puis au travers de l'orifice de distribution 43. Dans la position de repos illustrée par la figure 1, il est donc possible d'injecter, par la buse de distribution 4, un premier fluide acheminé au travers du dispositif de nettoyage selon l'invention. Toutefois, cette injection se fait alors que l'orifice de distribution est dans une position escamotée, c'est-à-dire avec un corps creux 2 dans une position d'origine où la partie d'admission 22 est au voisinage de la bride d'entrée, et l'on comprend que dans cette position escamotée, le fluide éjecté par la buse n'est pas dirigé sur la face à nettoyer du capteur, par exemple la lentille d'une caméra.

Pour obtenir la deuxième position du dispositif de nettoyage selon l'invention, ou première position de travail, illustrée sur la figure 2, dans laquelle la buse est déployée longitudinalement pour être en regard de la face à nettoyer du capteur (tel que visible sur la figure 5), un deuxième fluide est injecté dans le dispositif, plus précisément par le deuxième embout d'admission 57, selon la direction représentée par la flèche F2. Le deuxième fluide est acheminé dans le deuxième canal d'admission 56, jusqu'au volume annulaire intérieur V défini plus haut. Là, sous l'effet de sa pression d'injection, le deuxième fluide repousse la partie d'admission 22 du piston creux 2 en direction de l'aval du dispositif selon l'invention, de telle manière que le volume V augmente. Avantageusement, un joint 7, par exemple du type joint à lèvre, est placé sur la face amont de la partie d'admission 22 qui est au contact du deuxième fluide, afin d'éviter toute fuite de celui-ci à l'extérieur du volume V. Le piston creux 2 coulisse alors au sein du corps creux 1, autour du tube d'acheminement 53. Dans ce coulissement, la chambre d'acheminement coulisse autour du tube d'acheminement 53 relativement à celui-ci, et la partie terminale 21 du piston creux se déplace vers l'aval du dispositif de nettoyage, définissant ainsi une première position déployée de la buse d'injection 4. Dans la position illustrée par la figure 2, les positions relatives de la chambre d'acheminement 24 et du tube d'acheminement 53 qui découlent du remplissage du volume intérieur V par le deuxième fluide, sont tels que l'étanchéité du coulissement de ces deux éléments l'un par rapport à l'autre est toujours assurée par la présence du joint torique 6.

Le premier fluide peut alors être injecté et acheminé au sein du dispositif selon l'invention jusqu'à l'orifice de distribution 43 de la buse de distribution 4, d'où il est distribué selon les directions illustrées par les flèches f1 comme il vient d'être décrit.

La figure 3 illustre une position dans laquelle l'admission du deuxième fluide a été maintenue, de telle manière que le volume intérieur V a encore été augmenté et que la course vers l'aval du piston creux 2 a été prolongée. Dans cette position, le joint torique 6 et au moins l'épaulement annulaire 530 se trouvent au sein de la chambre d'admission 25 ménagée dans la partie d'admission 22, dont le diamètre intérieur est au moins légèrement supérieur au plus grand diamètre intérieur de la chambre d'acheminement 24. Il en résulte que le joint torique 6 n'assure plus l'étanchéité du coulissement du tube d'acheminement 53 au sein de la chambre d'acheminement 24, et qu'un jeu transversal est prévu entre le joint torique 6 et la chambre d'admission 25, de manière à mettre en communication le volume intérieur V défini plus haut et ladite chambre d'acheminement 24, comme le montre la figure 3. Il s'ensuit qu'il n'existe plus d'obstacle au passage du deuxième fluide dans la chambre d'acheminement 24, via la chambre d'admission 25 et la périphérie de l'embout terminal 531 du tube d'acheminement 53. Ce passage est illustré, sur la figure 3, par les flèches f2. Premier et deuxième fluides peuvent alors se mélanger dans la chambre d'acheminement 24, puis dans le conduit de distribution 23 et, enfin, dans la buse d'injection 4, d'où le mélange ainsi obtenu peut être délivré via l'orifice de distribution 43.

Il est à noter que la présence de la valve anti-retour 3 permet, comme précédemment, d'éviter toute remontée du mélange de fluides vers l'amont. Il est à noter également que, dans cette position, la buse de distribution 4 se trouve encore repoussée vers l'aval du dispositif, dans une deuxième position déployée. Enfin, il est à noter que la présence de l'embout terminal 531, dont le diamètre extérieur est sensiblement inférieur au diamètre extérieur du tube d'acheminement 53, permet à la fois un acheminement plus aisé du mélange de fluides au sein de la chambre d'acheminement, tout en évitant tout effet de "succion" lorsque le joint torique 6 franchit la zone élargie du diamètre intérieur de la chambre d'acheminement 24. A cet effet, l'emplacement précis de la gorge annulaire 532 qui accueille le joint torique 6 et la dimension longitudinale de cet embout terminal seront avantageusement choisis pour réduire au maximum la distance séparant le franchissement de cet élargissement par le joint torique 6 et son franchissement par l'épaulement 530 du tube d'acheminement 53. En d'autres termes, gorge 532 et épaulement 531 seront avantageusement ménagés au plus près l'un de l'autre selon la direction longitudinale du dispositif selon l'invention.

Comme le montrent les figures 1 à 3, un ressort 8 est avantageusement disposé dans la première cavité 12 du corps creux 1. Plus précisément, le ressort 8 est placé autour du piston creux 2, au sein de la première cavité 12, et il est respectivement pris entre, vers l'amont, la collerette 22a de la partie d'admission 22 et, vers l'aval, une paroi du fond aval de la première cavité 12. Dans sa course sous l'effet de l'admission du deuxième fluide, le piston creux comprime ce ressort 8, comme le montrent plus précisément les figures 2 et 3.

Lorsque l'admission du deuxième fluide cesse, la course vers l'aval du piston creux cesse également, et la force de rappel du ressort 8 ramène donc alors le piston creux 2 vers l'amont, de sorte que le liquide restant dans le volume intérieur V retourne dans le réservoir sous l'effet de cette pression. Plus précisément, le piston creux 2 est ramené vers l'amont jusqu'à ce que le joint torique 6 franchisse à nouveau, mais vers l'amont cette fois, la zone d'élargissement du diamètre intérieur de la chambre d'acheminement 24. Une fois cette zone franchie, le joint torique assure à nouveau l'étanchéité du coulissement relatif de la chambre d'acheminement et du tube d'acheminement. On pourra prévoir un dispositif annexe, non représenté sur les figures, adjoint au dispositif de nettoyage, pour que, une fois arrêtée l'admission du deuxième fluide dans le volume intérieur V et une fois que le piston creux sera revenu dans sa position telle qu'illustrée par la Figure 2, la quantité résiduelle de deuxième fluide dans ledit volume intérieur V soit vidangée, de telle manière que le ressort de rappel 8, dans sa course vers l'amont, ramène l'ensemble du dispositif de nettoyage dans sa position initiale, de repos, telle qu'illustrée par la figure 4.

Selon la quantité de deuxième fluide admise dans le dispositif, l'invention permet donc d'acheminer sélectivement, jusqu'à la buse unique de distribution 4 et son orifice de distribution 43, soit un unique premier fluide, soit un mélange de premier fluide et de deuxième fluide. Il est bien sûr à noter que premier et deuxième fluides peuvent être gazeux ou liquides sans qu'il nuise à l'invention, de même qu'ils peuvent être constitués d'un fluide unique ou de mélanges de fluides sans que cela modifie l'invention ou son fonctionnement. Une application préférée est de prévoir que le deuxième fluide soit du liquide de nettoyage, de sorte qu'il sort par la buse de nettoyage lorsque celle-ci a été amenée en position de travail, en regard de la face du capteur à nettoyer et par exemple une lentille de caméra, par l'action de ce liquide de nettoyage, et de prévoir que le premier fluide soit de l'air, que l'on vient injecter dans le dispositif après le passage du liquide de nettoyage dans la buse d'injection pour venir purger le liquide résiduel dans le dispositif, et éviter la possibilité de givre, et/ou pour venir sécher la lentille nettoyée.

Par ailleurs, le dispositif selon l'invention, tel qu'il vient d'être décrit et tel qu'il est illustré par les figures, est simple, de fonctionnement fiable, et de production facile en grande série. Il présente donc un intérêt particulier pour l'application automobile qu'il vise.

Dans une variante de réalisation de l'invention, on peut prévoir que le deuxième fluide ne participe qu'au déplacement longitudinal du piston creux pour amener la buse en position déployée de travail, et que seul le premier fluide soit injecté dans la chambre d'acheminement, le canal de distribution et la buse. On saura, pour ce faire, dimensionner différemment le piston creux, ou plus facilement le tube d'étanchéité 53 pour que, dans la position de travail, le joint 6 soit toujours dans la partie de plus petit diamètre intérieur de la chambre d'acheminement. On pourra également prévoir de réaliser une chambre d'admission 25 de même diamètre intérieur que celui de la chambre d'acheminement. Dans tous ces cas, lorsque le piston creux est en position de travail, le deuxième fluide reste bloqué dans le volume intérieur V et il ne peut venir dans la chambre d'acheminement 24 et se mélanger avec le premier fluide. Dans ce cas, on pourra prévoir d'acheminer vers la buse soit un premier fluide, soit un mélange de premier fluide et de deuxième fluide, mais uniquement via le premier canal d'admission 55.

Il est à noter que l'invention ne saurait se réduire aux moyens et configurations décrits et illustrés. A titre d'exemple, on pourra prévoir un dispositif de chauffage en amont du dispositif de nettoyage pour que les fluides acheminés et distribués sélectivement soit des fluides chauds pour faciliter le séchage ultérieur de la face à nettoyer du capteur et éviter la formation de givre à l'intérieur du dispositif de nettoyage.

## Revendications

1. Dispositif de nettoyage d'un capteur d'un véhicule automobile, ledit dispositif comportant un piston (2) mobile en coulissement dans un corps creux (1) de révolution autour d'un axe longitudinal (XX) et porteur à une première extrémité d'une buse unique (4) de distribution d'un ou plusieurs fluides, ledit piston étant creux pour permettre l'acheminement vers la buse d'au moins un premier fluide, **caractérisé en ce que** ledit piston creux est rendu mobile, entre une position de repos et une position de travail, sous l'effet d'un deuxième fluide pour prendre une position de travail dans laquelle la buse est déployée.

2. Dispositif selon la revendication 1, **caractérisé en ce qu'**il comporte des moyens d'admission et d'acheminement sélectifs d'un ou plusieurs fluides distincts vers cette buse unique de distribution (4).

3. Dispositif selon la revendication 2, **caractérisé en ce que** les moyens d'admission et d'acheminement sélectifs d'un ou plusieurs fluides comportent un premier embout d'admission de fluide (54), centré sur l'axe longitudinal (XX) du corps creux, et un deuxième embout d'admission de fluide (57), excentré par rapport audit premier embout d'admission de fluide.

4. Dispositif selon la revendication 3, **caractérisé en ce que** les embouts d'admission de fluide sont formés en saillie d'une bride d'entrée (50) venant en recouvrement du corps creux et du piston à l'extrémité opposée à la buse.

5. Dispositif selon l'une des revendications précédentes, **caractérisé en ce que** le deuxième fluide est acheminé vers un volume intérieur (V), délimité par au moins une paroi du piston creux (2).

6. Dispositif selon la revendication précédente, **caractérisé en ce que** le piston creux (2) et les moyens d'admission et d'acheminement sélectifs d'un ou plusieurs fluides sont agencés de sorte que le deuxième fluide est acheminé via le piston creux (2) vers la buse de nettoyage (4), lorsque le piston creux est dans ladite position de travail.

7. Dispositif selon la revendication 5, **caractérisé en ce que** le piston creux (2) et les moyens d'admission et d'acheminement sélectifs d'un ou plusieurs fluides sont agencés de sorte que le deuxième fluide est bloqué dans ledit volume intérieur (V) lorsque le piston creux (2) est dans ladite position de travail.

8. Dispositif selon l'une des revendications précédentes, **caractérisé en ce que** des moyens élastiques de rappel en position (8) sont logés dans le corps creux (1) pour porter contre le piston creux (2) et tendre à rappeler en position de repos ledit piston.

9. Dispositif selon l'une des revendications précédentes, **caractérisé en ce que** le piston creux (2) comporte une partie centrale (20) sensiblement cylindrique, apte à coulisser au sein d'un tube creux (11) coaxial du corps creux (1), une partie terminale de distribution (21) dans laquelle la buse unique de distribution (4) est apte à être insérée et bloquée, et une partie d'admission (22) apte à coulisser au sein d'une première cavité (12) du corps creux (1).

10. Dispositif selon la revendication précédente, **caractérisé en ce qu'**un conduit de distribution (23), une chambre d'acheminement (24), et une chambre d'admission (25) traversants, coaxiaux, et communicant entre eux, sont respectivement agencés dans la partie terminale de distribution (21), la partie centrale (20), et la partie d'admission (22) du piston creux (2), et **en ce que** le conduit de distribution (23) communique avec un canal de distribution (41) de la buse de distribution (4), lui-même relié à un canal d'injection (42) qui débouche en un orifice d'injection (43) de cette buse unique de distribution (4).

11. Dispositif selon la revendication précédente, **caractérisé en ce que** le diamètre intérieur du conduit de distribution (23) présente, au voisinage de la zone par laquelle le conduit de distribution (23) communique avec la chambre d'acheminement (24), un rétrécissement, et **en ce que** l'épaulement (230) formé, au sein du conduit de distribution (23), par ce rétrécissement, accueille une valve anti-retour (3).

12. Dispositif selon l'une des revendications précédentes, en combinaison avec au moins la revendication 4, **caractérisé en ce qu'**un tube d'acheminement (53) s'étend, à partir de la bride d'entrée (50), au sein de la chambre d'admission (25) et de la chambre d'acheminement (24), dans lesquelles il est apte à coulisser coaxialement avec celles-ci, et se prolonge, à l'opposé de ces dernières, à partir de la bride d'entrée (50), par le premier embout d'admission (54).

13. Dispositif selon la revendication précédente, **caractérisé en ce qu'**un premier canal d'admission, traversant, coaxial avec la chambre d'acheminement (24) et avec la chambre d'admission (25), est agencé au sein du tube d'acheminement (53) et du premier embout d'admission (54), et **en ce qu'**un deuxième canal d'admission (56), traversant, est agencé au sein du deuxième embout d'admission (57) et de la bride d'entrée (50).

14. Dispositif selon la revendication précédente, en combinaison avec au moins la revendication 5, **caractérisé en ce que** le deuxième canal d'admission (56) débouche au sein d'un volume intérieur (V) délimité par la bride d'entrée (50), la partie d'admission (22), et le corps creux (1).

15. Dispositif selon la revendication 11, **caractérisé en ce que**, sous l'effet de l'admission d'un fluide au sein du volume intérieur (V) par l'intermédiaire du deuxième canal d'admission (56), le coulissement du piston creux (2) autour du tube d'acheminement (53) résultant de l'augmentation du volume intérieur (V) conduit à un déplacement longitudinal de la buse unique de distribution (4) jusqu'à une position déployée de celle-ci dans laquelle elle est éloignée du corps creux (1).

16. Dispositif selon l'une des revendications 12 à 15, **caractérisé en ce qu'**une gorge annulaire (532) est agencée à la périphérie du tube d'acheminement (53), au voisinage de son extrémité opposée à celle par laquelle il s'étend à partir de la bride d'entrée (50), et **en ce que** la gorge annulaire (532) est apte à accueillir un joint (6), préférentiellement torique, qui assure l'étanchéité du coulissement du tube d'acheminement (53) au sein de la partie de plus petit diamètre intérieur de la chambre d'acheminement (24).

17. Dispositif selon la revendication précédente, **caractérisé en ce qu'**il comporte un joint (7) apte à assurer l'étanchéité du volume intérieur (V) lorsque celui-ci est rempli d'un fluide admis en son sein par le deuxième canal d'admission (56) et tant que le joint (6) assure l'étanchéité du coulissement du tube d'acheminement (53) au sein de la chambre d'acheminement.

18. Dispositif selon l'une des revendications 10 à 17, en combinaison avec la revendication 6, **caractérisé en ce que** le diamètre intérieur de la chambre d'acheminement (24) est inférieur au diamètre intérieur de la chambre d'admission (25).

19. Dispositif selon la revendication précédente, en combinaison avec au moins la revendication 16 **caractérisé en ce que** les dimensions du joint (6) sont définies de telle manière que, lorsqu'il se trouve dans la chambre d'admission (25), il permet la mise en communication du volume intérieur (V) avec la chambre d'acheminement (24).

## Patentansprüche

1. Vorrichtung zur Reinigung eines Sensors eines Kraftfahrzeugs, wobei die Vorrichtung einen Kolben (2) umfasst, der schiebbar in einem sich um eine Längsachse (XX) drehenden Hohlkörper (1) angeordnet ist und an einem ersten Ende eine einzige Düse (4) zur Verteilung von einem oder mehreren Fluiden trägt, wobei der Kolben hohl ist, um die Zufuhr von wenigstens einem ersten Fluid zu der Düse zu ermöglichen, **dadurch gekennzeichnet, dass** der hohle Kolben unter der Einwirkung eines zweiten Fluids zwischen einer Ruheposition und einer Arbeitsposition beweglich ist, um eine Arbeitsposition einzunehmen, in der die Düse ausgefahren ist.

2. Vorrichtung nach Anspruch 1, **dadurch gekennzeichnet, dass** sie Mittel zum selektiven Einlassen und Zuführen von einem oder mehreren unterschiedlichen Fluiden zu dieser einzigen Verteilungsdüse (4) umfasst.

3. Vorrichtung nach Anspruch 2, **dadurch gekennzeichnet, dass** die Mittel zum selektiven Einlassen und Zuführen von einem oder mehreren Fluiden einen ersten Fluideinlassansatz (54), der auf die Längsachse (XX) des Hohlkörpers zentriert ist, und einen zweiten Fluideinlassansatz (57), der in Bezug auf den ersten Fluideinlassansatz exzentrisch ist, umfassen.

4. Vorrichtung nach Anspruch 3, **dadurch gekennzeichnet, dass** die Fluideinlassansätze von einem Eingangsflansch (50) vorspringend gebildet sind, der den Hohlkörper und den Kolben an dem der Düse entgegengesetzten Ende bedeckt.

5. Vorrichtung nach einem der vorhergehenden Ansprüche, **dadurch gekennzeichnet, dass** das zweite Fluid einem Innenvolumen (V) zugeführt wird, das durch wenigstens eine Wand des hohlen Kolbens (2) begrenzt ist.

6. Vorrichtung nach dem vorhergehenden Anspruch, **dadurch gekennzeichnet, dass** der hohle Kolben (2) und die Mittel zum selektiven Einlassen und Zuführen von einem oder mehreren Fluiden derart ausgebildet sind, dass das zweite Fluid durch den hohlen Kolben (2) der Reinigungsdüse (4) zugeführt wird, wenn sich der hohle Kolben in der Arbeitsposition befindet.

7. Vorrichtung nach Anspruch 5, **dadurch gekennzeichnet, dass** der hohle Kolben (2) und die Mittel zum selektiven Einlassen und Zuführen von einem oder mehreren Fluiden derart ausgebildet sind, dass das zweite Fluid in dem Innenvolumen (V) blockiert wird, wenn sich der hohle Kolben (2) in der Arbeitsposition befindet.

8. Vorrichtung nach einem der vorhergehenden Ansprüche, **dadurch gekennzeichnet, dass** elastische Positionsrückstellmittel (8) in dem Hohlkörper (1) untergebracht sind, um an dem hohlen Kolben (2) anzuliegen und zu versuchen, den Kolben in die Ruheposition zurückzustellen.

9. Vorrichtung nach einem der vorhergehenden Ansprüche, **dadurch gekennzeichnet, dass** der hohle Kolben (2) einen im Wesentlichen zylindrischen mittleren Teil (20), der im Inneren eines hohlen Rohres (11) gleiten kann, das koaxial mit dem Hohlkörper (1) ist, einen Verteilungs-Endteil (21), in den bzw. dem die einzige Verteilungsdüse (4) eingeführt und blockiert werden kann, und einen Einlassteil (22), der im Inneren eines ersten Hohlraums (12) des Hohlkörpers (1) gleiten kann, umfasst.

10. Vorrichtung nach dem vorhergehenden Anspruch, **dadurch gekennzeichnet, dass** eine Verteilungsleitung (23), eine Zuführkammer (24) und eine Einlasskammer (25), die durchgehend, koaxial und miteinander kommunizierend sind, in dem Verteilungs-Endteil (21), dem mittleren Teil (20) bzw. dem Einlassteil (22) des hohlen Kolbens (2) ausgebildet sind, und dass die Verteilungsleitung (23) mit einem Verteilungskanal (41) der Verteilungsdüse (4) kommuniziert, die ihrerseits mit einem Einspritzkanal (42) verbunden ist, der in einer Einspritzöffnung (43) dieser einzigen Verteilungsdüse (4) mündet.

11. Vorrichtung nach dem vorhergehenden Anspruch, **dadurch gekennzeichnet, dass** der Innendurchmesser der Verteilungsleitung (23) in der Nähe des Bereichs, durch den die Verteilungsleitung (23) mit der Zuführkammer (24) kommuniziert, eine Verengung aufweist, und dass die Schulter (230), die im Inneren der Verteilungsleitung (23) durch diese Verengung gebildet wird, ein Rückschlagventil (3) aufnimmt.

12. Vorrichtung nach einem der vorhergehenden Ansprüche, in Kombination mit wenigstens Anspruch 4, **dadurch gekennzeichnet, dass** sich ein Zuführrohr (53) ausgehend von dem Eingangsflansch (50) im Inneren der Einlasskammer (25) und der Zuführkammer (24) erstreckt, in denen es koaxial mit diesen gleiten kann, und entgegengesetzt zu den Letztgenannten ausgehend von dem Eingangsflansch (50) durch den ersten Einlassansatz (54) verlängert wird.

13. Vorrichtung nach dem vorhergehenden Anspruch, **dadurch gekennzeichnet, dass** ein durchgehender erster Einlasskanal, der koaxial mit der Zuführkammer (24) und der Einlasskammer (25) ist, im Inneren des Zuführrohrs (53) und des ersten Einlassansatzes (54) ausgebildet ist, und dass ein durchgehender zweiter Einlasskanal (56) im Inneren des zweiten Einlassansatzes (57) und des Eingangsflansches (50) ausgebildet ist.

14. Vorrichtung nach dem vorhergehenden Anspruch, in Kombination mit wenigstens Anspruch 5, **dadurch gekennzeichnet, dass** der zweite Einlasskanal (56) im Inneren eines Innenvolumens (V) mündet, das durch den Eingangsflansch (50), den Einlassteil (22) und den Hohlkörper (1) begrenzt ist.

15. Vorrichtung nach Anspruch 11, **dadurch gekennzeichnet, dass** unter der Einwirkung des Einlasses eines Fluids in das Innere des Innenvolumens (V) über den zweiten Einlasskanal (56) das Schieben des hohlen Kolbens (2) um das Zuführrohr (53), das aus der Zunahme des Innenvolumens (V) resultiert, zu einer Längsverschiebung der einzigen Verteilungsdüse (4) bis zu einer ausgefahrenen Position von dieser führt, in der sie von dem Hohlkörper (1) entfernt ist.

16. Vorrichtung nach einem der Ansprüche 12 bis 15, **dadurch gekennzeichnet, dass** eine ringförmige Einschnürung (532) am Umfang des Zuführrohrs (53) in der Nähe ihres Endes ausgebildet ist, das jenem entgegengesetzt ist, durch das es sich ausgehend von dem Eingangsflansch (50) erstreckt, und dass die ringförmige Einschnürung (532) eine Dichtung (6), vorzugsweise einen O-Ring, aufnehmen kann, der die Dichtigkeit des Schiebens des Zuführrohrs (53) im Inneren des Teils mit dem kleinsten Innendurchmesser der Zuführkammer (24) gewährleistet.

17. Vorrichtung nach dem vorhergehenden Anspruch, **dadurch gekennzeichnet, dass** sie eine Dichtung (7) umfasst, die die Dichtigkeit des Innenvolumens (V) gewährleisten kann, wenn dieses mit einem Fluid gefüllt ist, das durch den zweiten Einlasskanal (56) in sein Inneres eingelassen wird, und solang die Dichtung (6) die Dichtigkeit des Schiebens des Zuführrohrs (53) im Inneren der Zuführkammer gewährleistet.

18. Vorrichtung nach einem der Ansprüche 10 bis 17, in Kombination mit Anspruch 6, **dadurch gekennzeichnet, dass** der Innendurchmesser der Zuführkammer (24) kleiner als der Innendurchmesser der Einlasskammer (25) ist.

19. Vorrichtung nach dem vorhergehenden Anspruch, in Kombination mit wenigstens Anspruch 16, **dadurch gekennzeichnet, dass** die Abmessungen der Dichtung (6) derart definiert sind, dass sie, wenn sie sich in der Einlasskammer (25) befindet, die Verbindung des Innenvolumens (V) mit der Zuführkammer (24) ermöglicht.

## Claims

1. Device for cleaning a sensor of a motor vehicle, said device including a piston (2) able to slide in a circular hollow body (1) having a longitudinal axis (XX) and carrying at a first end a single nozzle (4) for distributing one or more fluids, said piston being hollow to enable the routing to the nozzle of at least one first fluid, **characterized in that** said hollow piston is rendered mobile, between a rest position and a working position, by the effect of a second fluid to take up a working position in which the nozzle is deployed.

2. Device according to Claim 1, **characterized in that** it includes means for the selective admission and routing of one or more distinct fluids to this single distribution nozzle (4).

3. Device according to Claim 2, **characterized in that** the means for selective admission and routing of one or more fluids include a first fluid admission tip (54), centred on the longitudinal axis (XX) of the circular hollow body, and a second fluid admission tip (57), eccentric relative to said first fluid admission tip.

4. Device according to Claim 3, **characterized in that** the fluid admission tips project from an inlet flange (50) coming to cover the hollow body and the piston at the end opposite the nozzle.

5. Device according to any one of the preceding claims, **characterized in that** the second fluid is routed to an interior volume (V), delimited by at least one wall of the hollow piston (2).

6. Device according to the preceding claim, **characterized in that** the hollow piston (2) and the means for selective admission and routing of one or more fluids are such that the second fluid is routed via the hollow piston (2) to the cleaning nozzle (4), when the hollow piston is in said working position.

7. Device according to Claim 5, **characterized in that** the hollow piston (2) and the means for selective admission and routing of one or more fluids are such that the second fluid is retained in said interior volume (V) when the hollow piston (2) is in said working position.

8. Device according to any one of the preceding claims, **characterized in that** return spring means (8) are accommodated in the hollow body (1) to bear against the hollow piston (2) and urge said piston into the rest position.

9. Device according to any one of the preceding claims, **characterized in that** the hollow piston (2) includes a substantially cylindrical central part (20), able to slide inside a hollow tube (11) coaxial with the hollow body (1), a distribution terminal part (21) in which the single distribution nozzle (4) can be inserted and immobilized, and an admission part (22) able to slide inside a first cavity (12) of the hollow body (1).

10. Device according to the preceding claim, **characterized in that** a distribution through-conduit (23), a routing through-chamber (24), and an admission through-chamber (25) that are coaxial and communicate with one another are respectively arranged in the distribution terminal part (21), the central part (20), and the admission part (22) of the hollow piston (2), and **in that** the distribution conduit (23) communicates with a distribution channel (41) of the distribution nozzle (4), itself connected to an injection channel (42) that leads to an injection orifice (43) of this single distribution nozzle (4).

11. Device according to the preceding claim, **characterized in that** the inside diameter of the distribution conduit (23) has, in the vicinity of the area through which the distribution conduit (23) communicates with the routing chamber (24), a constriction, and **in that** the shoulder (230) formed, inside the distribution conduit (23), by this constriction, accepts a non-return valve (3).

12. Device according to any one of the preceding claims, in combination with at least Claim 4, **characterized in that** a routing tube (53) extends, from the inlet flange (50), inside the admission chamber (25) and the routing chamber (24), in which it is able to slide coaxially with them, and is extended, opposite them, from the inlet flange (50), by the first admission tip (54).

13. Device according to the preceding claim, **characterized in that** a first admission through-channel that is coaxial with the routing chamber (24) and with the admission chamber (25) is arranged inside the routing tube (53) and the first admission tip (54), and **in that** a second admission through-channel (56) is arranged inside the second admission tip (57) and the inlet flange (50).

14. Device according to the preceding claim, in combination with at least Claim 5, **characterized in that** the second admission channel (56) leads into an interior volume (V) delimited by the inlet flange (50), the admission part (22), and the hollow body (1).

15. Device according to Claim 11, **characterized in that**, because of the effect of the admission of a fluid into the interior volume (V) via the second admission channel (56), the sliding of the hollow piston (2) around the routing tube (53) resulting from the increase in the interior volume (V) leads to a longitudinal movement of the single distribution nozzle (4) to a deployed position thereof in which it is spaced from the circular hollow body (1).

16. Device according to any one of Claims 12 to 15, **characterized in that** there is an annular groove (532) at the periphery of the routing tube (53), in the vicinity of its end opposite that at which it extends from the inlet flange (50), and **in that** the annular groove (532) is adapted to receive a seal (6), preferably an O-ring, which seals the sliding of the routing tube (53) inside the smaller inside diameter part of the routing chamber (24).

17. Device according to the preceding claim, **characterized in that** it includes a seal (7) able to seal the interior volume (V) when the latter is filled with a fluid admitted into it via the second admission channel (56) provided that the seal (6) seals the sliding of the routing tube (53) inside the routing chamber.

18. Device according to any one of Claims 10 to 17, in combination with Claim 6, **characterized in that** the inside diameter of the routing chamber (24) is less than the inside diameter of the admission chamber (25).

19. Device according to the preceding claim, in combination with at least Claim 16, **characterized in that** the dimensions of the seal (6) are such that, when it is in the admission chamber (25), it enables communication of the interior volume (V) with the routing chamber (24).
